# EUROPÄISCHE PATENTSCHRIFT

(11) **EP 1 833 340 B1**
(45) Veröffentlichungstag und Bekanntmachung des Hinweises auf die Patenterteilung: **10.09.2008**
(21) Anmeldenummer: 05811031.3
(22) Anmeldetag: 27.10.2005
(51) Int. Cl.: A47J 31/46, A47J 31/44

(54) **BRÜHGETRÄNKEMASCHINE**
HOT BEVERAGE MACHINE
MACHINE DE PREPARATION DE BOISSONS CHAUDES

(30) Priorität: 27.12.2004 DE 102004062747
(43) Veröffentlichungstag der Anmeldung: 19.09.2007
(73) Patentinhaber: BSH Bosch und Siemens Hausgeräte GmbH, 81739 München (DE)
(72) Erfinder: KRAMER, Siegmund, 83417 Kirchanschöring (DE); OSTERMAIER, Albert, 83371 Stein/Traun (DE)
(86) Internationale Anmeldenummer: PCT/EP2005/055595
(87) Internationale Veröffentlichungsnummer: WO 2006/069838

(56) Entgegenhaltungen:
- DE-A1- 3 537 063
- DE-A1- 19 545 111

## Beschreibung

Die Erfindung betrifft eine Brühgetränkemaschine mit einer Dampferzeugungseinrichtung mit einer Heizeinrichtung zur Bereitstellung von Dampf, wobei die Dampferzeugungseinrichtung einen der Heizeinrichtung nachgeschalteten Dampfabscheider umfasst, der eine Kammer mit einer Einlassöffnung für ein Dampf-Wasser-/Gemisch (DW) mit einer in einem oberen Bereich der Kammer angeordneten Dampfablassöffnung und mit einer in einem unteren Bereich der Kammer angeordneten Wasserablassöffnung sowie ein Wasserablassventil für die Wasserablassöffnung umfasst.

Zu den typischen Brühgetränkemaschinen, welche eine Dampferzeugungseinrichtung aufweisen, gehören z. B. Espressomaschinen, professionelle oder semi-professionelle Kaffeeautomaten bzw. Kaffeevollautomaten oder auch viele multifunktionelle Getränkeautomaten, die unter anderem auch zur Zubereitung von Kaffeegetränken dienen.

Aus der DE 195 45 111 A1 und der DE 35 37 063 A1 sind Brühgetränkemaschinen mit Dampferzeugungseinrichtung und nachgeschalteten Dampfabscheidern bekannt.

Der heiße Dampf wird in der Regel zum Aufschäumen von Milch für die Zubereitung von Cappuccino, Latte Macchiato oder ähnlichen Kaffeegetränken genutzt. Üblicherweise befindet sich hierzu außenseitig an der Brühgetränkemaschine ein Dampfauslass mit einem Dampfrohr, welches an seinem freien Ende eine Düse (oft Cappuccino-Düse genannt) aufweist. Der Benutzer kann das Dampfrohr in ein mit Milch gefülltes Kännchen eintauchen und so mit Hilfe des Dampfs die Milch aufschäumen. Um einen guten Milchschaum zu erzeugen, muss der Benutzer dabei über einige Übung und Geschick verfügen. Weniger erfahrene Benutzer erreichen oft nur mit Glück ein zufriedenstellendes Aufschäumergebnis. Das Ergebnis beim Aufschäumen hängt dabei jedoch auch von der Art des Dampferzeugers ab. Sinnvoll ist es, einen Dampferzeuger mit einer möglichst starken Heizung zu verwenden. Bei einer zu schwachen Heizung besteht die Gefahr, dass mit dem Dampf zu viel Wasser in die Milch gerät. Auf der anderen Seite ist darauf zu achten, dass die Milch beim Aufschäumen durch den Dampf nicht zu heiß wird, da oberhalb einer Temperatur von ca. 60° bis 65° C die Eiweiß-Moleküle in der Milch gerinnen und dann keine Luftbläschen mehr festhalten können. Das Aufschäumergebnis ist dann ebenfalls nicht optimal.

Es ist eine Aufgabe der vorliegenden Erfindung, eine Brühgetränkemaschine der eingangs genannten Art mit einer Dampferzeugungseinrichtung derart zu verbessern, dass der Benutzer leichter ein optimales Aufschäumergebnis erzielen kann.

Diese Aufgabe wird erfindungsgemäß dadurch gelöst, dass die Dampferzeugereinrichtung der Brühgetränkemaschine einen der Heizeinrichtung nachgeschalteten Dampfabscheider umfasst, der eine Ventilsteuereinrichtung aufweist, um ein Wasserablassventil in Abhängigkeit von einem Wasserstand in einer Kammer anzusteuern.

Ein solcher Dampfabscheider (bzw. Wasserabscheider) sorgt dafür, dass der Wasseranteil des üblicherweise aus der Heizeinrichtung kommenden Dampf-/Wassergemischs (d. h. des sogenannten "Nassdampfs") abgeschieden wird. Der verbleibende Dampfanteil, der durch den Dampfauslass entnommen werden kann, weist dann nur noch einen reduzierten Wassergehalt auf, d. h. es handelt sich um einen getrockneten Dampf. Um einen geringen Wasseranteil im Dampf zu erreichen, ist es also nicht mehr erforderlich, dass der Dampf wie bei den herkömmlichen Maschinen, welche keinen Dampfabscheider besitzen, eine möglichst hohe Temperatur aufweist. Somit wird zum einen die Gefahr reduziert, dass die Milch beim Aufschäumen überhitzt wird. Zum anderen kann die Brühgetränkemaschine - ohne dass dies zu einer Qualitätsverminderung bei der Dampferzeugung führt - mit einer Heizung ausgestattet werden, die für geringere Temperaturen ausgelegt ist. Dies ist sowohl bei der Herstellung der Brühgetränkemaschine als auch im laufenden Betrieb aufgrund der Energieersparnis kostengünstiger.

Die abhängigen Ansprüche enthalten besonders vorteilhafte Weiterbildungen und Ausgestaltungen der erfindungsgemäßen Brühgetränkemaschine.

Grundsätzlich kann der Dampferzeuger eine von der Heizeinrichtung für die Brühgetränkezubereitung unabhängige, separate Heizeinrichtung aufweisen. D. h. es wird beispielsweise Wasser von einem Wassertank oder einem Wasseranschluss sowohl einer ersten Heizeinrichtung zur Brühgetränkezubereitung als auch einer zweiten Heizeinrichtung zur Dampferzeugung zugeleitet. Die Verwendung zweier separater Heizeinrichtungen hat den Vorteil, dass gleichzeitig Wasser für die Brühgetränkezubereitung und Dampf erzeugt werden kann. Dies ist vor allem bei professionellen oder semi-professionellen Maschinen sinnvoll.

Bei kleineren Brühgetränkemaschinen ist es jedoch meist von Vorteil, wenn eine gemeinsame Heizeinrichtung zur Erzeugung des Heißwassers für die Brühgetränkezubereitung und die Dampferzeugung verwendet wird. Die Verwendung einer gemeinsamen Heizeinrichtung ist nicht nur kostengünstiger, sondern benötigt auch weniger Raum, so dass die Brühgetränkemaschine insgesamt mit kleineren Ausmaßen konstruiert werden kann, was besonders im Haushaltsbereich von Vorteil ist. Hierzu besitzt die Brühgetränkemaschine in einer bevorzugten Ausgestaltung eine Heizeinrichtung, die derart ausgebildet ist, dass sie zumindest zwischen zwei Betriebszuständen umschaltbar ist. In einem ersten Betriebszustand (Brühgetränkezubereitungs-Betriebszustand) erhitzt die Heizeinrichtung das Wasser auf einen ersten Temperaturwert von beispielsweise ca. 100° C zur Brühgetränkezubereitung. In einem zweiten Betriebszustand (Dampferzeugungs-Betriebszustand) wird durch die Heizeinrichtung Wasser auf einen zweiten Temperaturwert von beispielsweise ca. 130° C erhitzt, um Dampf zu erzeugen.

Als Heizeinrichtung kann beispielsweise ein Art Boiler verwendet werden. Der nachgeschaltete Dampfabscheider sorgt dann dafür, dass bei möglichst geringer Dampftemperatur der Wasseranteil minimiert wird.

In der Regel wird jedoch bei der erfindungsgemäßen Nutzung eines Dampfabscheiders bevorzugt ein Durchlauferhitzer zur Erzeugung des Dampfs verwendet. Dieser ist in der Regel erheblich platzsparender als eine Heizeinrichtung nach Art eines Boilers. Zudem erfolgt das Aufheizen schneller und wegen der erheblich geringeren Vorheizzeit auch energiesparender.

Insbesondere bei der Verwendung eines solchen Durchlauferhitzers weist die Brühgetränkemaschine vorzugsweise eine Pumpe mit einer Pumpensteuerung auf, welche derart ausgebildet ist, dass die Pumpe der Heizeinrichtung in einem Dampferzeugungs-Betriebszustand das Wasser in einem vorgegebenen Takt zuführt. D. h. die Pumpe wird während der Dampferzeugung nicht die volle Zeit betrieben, sondern über die Steuerung in definierten zeitlichen Abständen an- und ausgeschaltet. Durch diese Taktung der Pumpe wird dafür gesorgt, dass im Durchlauferhitzer gleichmäßig Dampf erzeugt und ein Überhitzen des Heizkörpers bzw. der Heizkörper des Durchlauferhitzers vermieden wird. Die Schaltzeiten werden besonders bevorzugt so gewählt, dass in etwa alle 3 s bis 10 s, vorzugsweise ca. alle 5 s, die Pumpe für ca. 0,3 s bis 1 s, vorzugsweise ca. 0,6 s, betrieben wird.

Der Dampfabscheider besteht aus einer Kammer mit einer Einlassöffnung für das von der Heizeinrichtung kommende Dampf-/Wassergemisch bzw. den Nassdampf, mit einer in einem oberen Bereich der Kammer angeordneten Dampfablassöffnung und mit einer im unteren Bereich der Kammer angeordneten Wasserablassöffnung sowie einem Wasserablassventil für die Wasserablassöffnung.

Der Dampfabscheider weist eine Ventilsteuerungseinrichtung auf, um das Wasserablassventil in Abhängigkeit von einem Wasserstand in der Kammer anzusteuern. Besonders bevorzugt umfasst diese Ventileinrichtung einen in der Kammer angeordneten Schwimmer, welcher mit dem Ablassventil gekoppelt ist. Dieser Aufbau ist außerordentlich einfach und kostengünstig und benötigt keine externe Steuerung.

Bei einer besonders einfachen Variante besteht das Ventil im Wesentlichen aus einem Ventilkörper, beispielsweise einem Ventilkegel, einem Ventilteller oder dergleichen, welcher im geschlossenen Zustand des Ventils gegen einen in der Wasserabflussöffnung innenseitig angeordneten Ventilsitz drückt. Der Schwimmer kann dabei so in der Kammer geführt werden, dass er sich über dem Ventilkörper befindet und direkt mittels einer Schubstange oder dergleichen mit dem Ventilkörper gekoppelt ist. Sobald der Wasserspiegel unter ein bestimmtes Niveau sinkt, drückt der Schwimmer den Ventilkörper in den Ventilsitz. Oberhalb eines bestimmten Wasserspiegels hebt der Schwimmer den Ventilköper vom Ventilsitz ab.

Bei einem ganz besonders kostengünstig und raumsparend aufgebauten Ausführungsbeispiel weist der Schwimmer an seinem unteren Ende einen integrierten Ventilkegelabschnitt auf, welcher mit einem in oder an der Wasserablassöffnung angeordneten Ventilsitz zusammenwirkt. Auf einen separaten Ventilkörper und eine Koppelung mit dem Schwimmer kann dann verzichtet werden.

Alternativ kann auch eine Koppelung über einen Hebelarm erfolgen, wobei durch die Ausgestaltung des Hebelarms die Kraft des Schwimmers auf den Ventilkörper eingestellt werden kann, um so die Kraft des Ventilkörpers, mit der dieser in den Ventilsitz drückt, und somit die Dichtigkeit des Ventils zu bestimmen.

Vorzugsweise ist die Wasserablassöffnung entweder direkt oder indirekt, beispielsweise über eine Pumpe oder durch einen Rücklauf in den Wassertank, mit einem Eingang der Heizeinrichtung verbunden, so dass das aus dem Dampfabscheider abgelassene Wasser wieder der Heizeinrichtung zugeführt wird.

Bei Verwendung einer gemeinsamen Heizeinrichtung für die Brühgetränkezubereitung und die Dampferzeugung befindet sich vorzugsweise hinter der Heizeinrichtung ein erstes Ventil, welches in einem ersten Schaltzustand die Verbindung von einem Ausgang der Heizeinrichtung zu der Brühkammer blockiert und in einem zweiten Schaltzustand die Verbindung von einem Ausgang der Heizeinrichtung zu dem Dampfabscheider blockiert. Gegebenenfalls kann dieses Ventil auch in einen dritten Schaltzustand geschaltet werden, in dem es ganz geschlossen ist. Z. B. kann dieses Ventil einen Ventileingang aufweisen, der in einem ersten Schaltzustand mit einem ersten, mit der Brühkammer verbundenen Ventilausgang verbunden ist, und der in einem zweiten Schaltzustand mit einem zweiten, mit dem Dampfabscheider verbundenen Ventilausgang verbunden ist.

Sofern die Brühgetränkemaschine zwei separate Heizeinrichtungen aufweist, kann ein solches Ventil auch vor den Heizeinrichtungen angeordnet sein, wobei mittels dieses Ventils dann geregelt wird, ob beispielsweise das von der Pumpe kommende Wasser der einen oder der anderen Heizeinrichtung zugeführt wird.

Sofern eine gemeinsame Heizeinrichtung verwendet wird, wird außerdem eine Steuerungseinrichtung benötigt, die eine geeignete Temperatursteuerung für die Heizeinrichtung umfasst, um die Heizeinrichtung in Abhängigkeit von der Betriebsart auf die passende Temperatur einzustellen. D. h. die Heizeinrichtung wird dann beispielsweise in einem Brühgetränkezubereitungsmodus auf 100° C und in einem Dampferzeugungsmodus auf 130° C eingestellt.

Bei einem besonders bevorzugten Ausführungsbeispiel sind die Temperatursteuerung und gegebenenfalls auch die bereits genannte Pumpensteuerung in einer Steuereinheit integriert. Über diese Steuereinheit kann beispielsweise - sofern es sich bei dem vorbeschriebenen ersten Ventil, welches die Umschaltung von der Heizeinrichtung zur Brühkammer bzw. zum Dampfabscheider realisiert, um ein elektrisch bzw. elektronisch ansteuerbares Ventil handelt - auch das erste Ventil gesteuert werden. Der Benutzer kann dann mit einem Knopfdruck zwischen dem Brühgetränkezubereitungsmodus und dem Dampferzeugungsmodus umschalten. Alternativ kann es sich bei dem genannten ersten Ventil auch um ein mechanisch umschaltbares Ventil handeln. Vorzugsweise wird dann über einen Sensor die Ventilstellung erfasst, wobei ein Ventilstellungssignal der Steuereinheit zugeführt wird, die dann für die passende Temperatureinstellung und Pumpenansteuerung sorgt.

Die Verwendung eines Dampfabscheiders kann dazu führen, dass erzeugter Dampf auch noch aus dem Dampfauslass entweicht, wenn das erste Ventil bereits wieder umgeschaltet wurde. Um dies zu vermeiden, befindet sich vorzugsweise zwischen dem Dampfabscheider und dem Dampfauslass ein zweites Ventil, um die Leitung zwischen dem Dampfabscheider und dem Dampfauslass zu unterbrechen. Dieses zweite Ventil ist vorzugsweise mit dem ersten Ventil gekoppelt, so dass das zweite Ventil geschlossen ist, wenn die Verbindung der Heizeinrichtung zum Dampfabscheider ebenfalls geschlossen ist. Dieses zweite Ventil kann mit dem ersten Ventil dabei derart gekoppelt sein, dass beide Ventile z. B. in einem gemeinsamen Ventilblock integriert sind und so gemeinsam geschaltet werden.

Am Dampfauslass kann prinzipiell eine beliebige Dampfauslassdüse verwendet werden. Besonders bevorzugt handelt es sich hierbei um eine sogenannte Venturi-Düse, bei der sich im Auslassrohr bzw. in der Düse unmittelbar vor dem Düsenausgang eine oder mehrere feine Bohrungen befinden, durch die beim Ausströmen von Dampf Milch angesaugt werden kann, welche dann wieder über den Dampfauslass abgegeben wird. Eine solche nach dem Venturi-Prinzip arbeitende Düse erleichtert das Aufschäumen der Milch.

Bei der Brühgetränkemaschine handelt es sich vorzugsweise um eine Espresso- und/oder Haushalts-Kaffeemaschine. Bei einem ganz besonders bevorzugten Ausführungsbeispiel handelt es sich um eine sogenannte Pad-Kaffemaschine. Derartige Kaffeemaschinen sind beispielsweise in der WO 01/15582 A1 oder der EP 1050248 A1 beschrieben. In solchen Maschinen werden sogenannte Kaffee-Pads verwendet, die üblicherweise aus zwei am Rand miteinander verbundenen Filterpapierblättern gebildet sind, die in ihrem mittleren Bereich Kaffeemehl einschließen. Die Pad-Kaffeemaschine weist eine durch den Benutzer zu öffnende Brühkammer auf, in die der Pad eingelegt werden kann. Über einen Verriegelungsmechanismus wird dann die Brühkammer geschlossen. Anschließend wird mit relativ hohem Druck heißes Wasser in die Brühkammer gedrückt und es werden so auf verhältnismäßig schonende Weise die Aromastoffe sowie Farbstoffe aus dem Kaffeemehl gelöst. Der dabei entstehende Kaffee läuft dann aus dem Auslauf in eine unter dem Auslauf bereitgestellte Tasse bzw. ein Kännchen. Diese Pad-Kaffeemaschinen haben gegenüber den klassischen Espressomaschinen den Vorteil einer erheblich einfacheren, schnelleren und komfortableren Bedienung, sowohl bei der Vorbereitung für einen Brühvorgang als auch bei der anschließenden Entsorgung des gebrauchten Kaffeemehls bzw. der Pads und bei der Reinigung der Maschine. Zudem sind diese Geräte in der Regel kleiner als klassische Espressomaschinen und benötigen somit weniger Standfläche. Insbesondere bei Verwendung einer Heizeinrichtung in Form eines Durchlauferhitzers, der sowohl zur Kaffeezubereitung als auch zur Dampferzeugung genutzt wird, und einem gemäß der Erfindung nachgeschalteten Dampfabscheider kann eine Pad-Kaffeemaschine realisiert werden, die trotz kostengünstigem und nach wie vor raumsparenden Aufbau nahezu die volle Funktionalität einer vollwertigen Espressomaschine bietet.

Die Erfindung wird im Folgenden unter Hinweis auf die beigefügten Figuren anhand von Ausführungsbeispielen noch einmal näher erläutert. Dabei werden so weit möglich für gleiche Komponenten die gleichen Bezugszeichen verwendet. Es zeigen:
- Figur 1: eine schematische Darstellung der Komponenten und ihres Zusammenwirkens einer erfindungsgemäßen Brühgetränkemaschine gemäß einem ersten Ausführungsbeispiel;
- Figur 2: eine schematische Darstellung der Komponenten und ihres Zusammenwirkens einer erfindungsgemäßen Brühgetränkemaschine gemäß einem zweiten Ausführungsbeispiel;
- Figur 3: eine Prinzipdarstellung eines Dampfabscheiders gemäß einem ersten Ausführungsbeispiel;
- Figur 4: einen perspektivischen Längsschnitt durch einen Dampfabscheider, welcher nach dem Konstruktionsprinzip gemäß Figur 3 aufgebaut ist;
- Figur 5: eine Prinzipdarstellung eines Dampfabscheiders gemäß einem zweiten Ausführungsbeispiel.

Da der erzeugte Dampf in erster Linie zur Milchschaumerzeugung für die Zubereitung von kaffeebasierten Getränken wie Cappuccino, Latte Macchiato etc. genutzt wird, wird im Folgenden ohne Beschränkung der Allgemeinheit davon ausgegangen, dass es sich bei der Brühgetränkemaschine um eine Kaffeemaschine, hier konkret eine Pad-Kaffeemaschine, handelt.

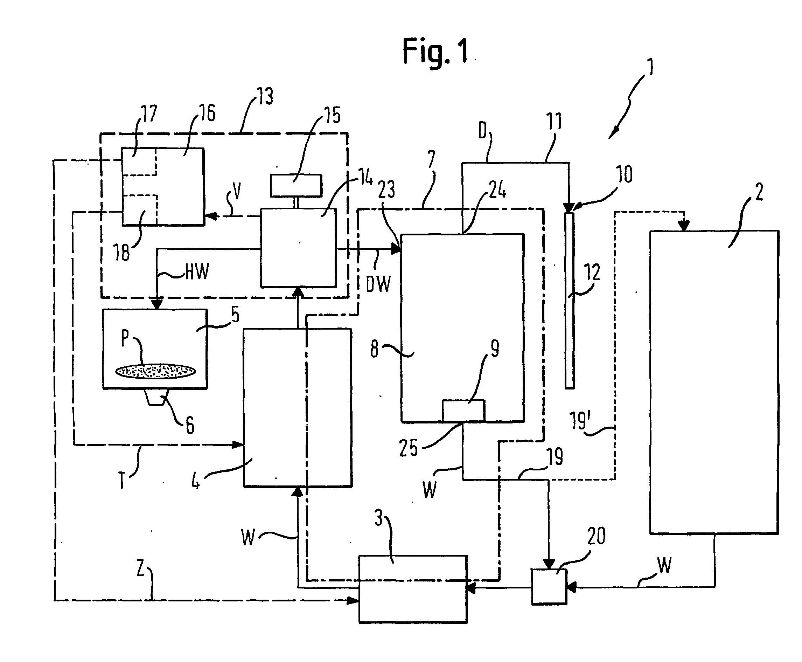

Das in Figur 1 dargestellte erste Ausführungsbeispiel einer erfindungsgemäßen Pad-Kaffeemaschine 1 weist in herkömmlicher Weise einen Wassertank 2 auf, in welchem das zur Kaffeezubereitung und zur Dampferzeugung benötigte Wasser vom Benutzer eingefüllt wird. Von diesem Wassertank 2 aus kann mittels einer Pumpe 3 das Wasser zu einer Heizeinrichtung 4, hier einem Durchlauferhitzer 4, gepumpt werden.

Im Durchlauferhitzer 4 wird das Wasser erhitzt und kann im Kaffeezubereitungsmodus der Kaffeemaschine 1 in üblicher Weise als Heißwasser HW unter hohem Druck einer Brühkammer 5 zugeführt werden, in welcher sich ein Kaffeepad P befindet. Durch das heiße Wasser HW werden aus dem in dem Kaffepad P befindlichen Kaffeemehl Aromastoffe und Farbstoffe gelöst, wodurch der Kaffee entsteht. Der Kaffee kann dann über einen Auslauf 6 entnommen werden.

Neben diesen üblichen Komponenten weist die erfindungsgemäße Kaffeemaschine 1 eine Dampferzeugungseinrichtung 7 auf, mit der heißer Dampf bereitgestellt werden kann. An dieser Dampferzeugungseinrichtung 7 ist ein geeigneter Dampfauslass 10 angeschlossen, hier bestehend aus einem Dampfrohr 11 mit einer Capuccino-Düse 12 am Ende, um den Dampf D zum Aufschäumen von Milch zu entnehmen. Zusätzlich weist die Kaffeemaschine 1 eine Steuerungseinrichtung 13 auf, um zwischen dem Kaffeezubereitungsmodus und einem Dampferzeugungsmodus, in dem der Dampf erzeugt wird, umstellen zu können.

Die zur Dampferzeugungseinrichtung 7 gehörenden Komponenten sind in Figur 1 durch eine strichpunktierte Linie umschlossen, wobei einige der Komponenten, nämlich die Pumpe 3 und der Durchlauferhitzer 4, nicht nur zur Dampferzeugung, sondern auch zur Aufbereitung des Heißwassers HW für die Kaffeezubereitung verwendet werden. Daher sind diese Komponenten 3, 4 nur teilweise der Dampferzeugungseinrichtung 7 zugeordnet. Neben diesen doppelt genutzten Funktionseinheiten, d. h. neben der Pumpe 3 und dem Durchlauferhitzer 4, weist die Dampferzeugungseinrichtung 7 erfindungsgemäß einen Dampfabscheider 8 auf, welchem das von dem Durchlauferhitzer 4 kommende Dampf/Wasser-Gemisch DW, d. h. der Nassdampf, zugeführt wird, damit der Dampfanteil D vom Wasseranteil W getrennt wird.

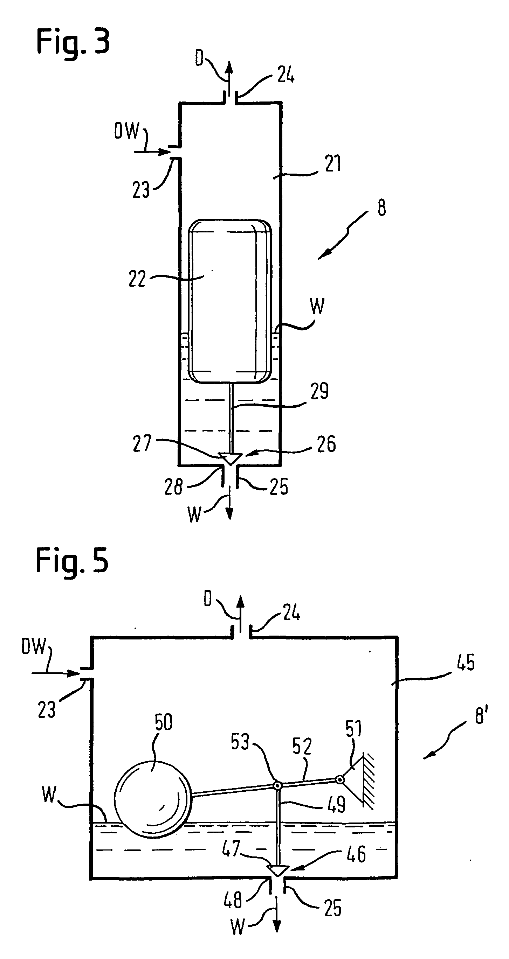

Das Funktionsprinzip einer einfachen Variante eines geeigneten Dampfabscheiders 8 ist aus Figur 3 zu ersehen. Der Dampfabscheider 8 besteht aus einer Kammer 21, welche an ihrer höchsten Stelle eine Dampfablassöffnung 24 aufweist, aus welcher der heiße Dampf D entweichen kann. An der Unterseite befindet sich an der tiefsten Stelle eine Wasserablassöffnung 25, durch die der abgeschiedene Wasseranteil W die Kammer 21 wieder verlassen kann. In der Seitenwandung befindet sich im oberen Bereich eine Einlassöffnung 23 für das Dampf/Wasser-Gemisch DW. Die Wasserablassöffnung 25 ist durch ein Ventil 26 verschließbar. Dieses Ventil 26 wird über einen Schwimmer 22 gesteuert, welcher innerhalb der Kammer 21 angeordnet ist.

Das Ventil 26 besteht dabei im Wesentlichen aus einem Ventilkörper 27, hier einem Ventilkegel 27, welcher im geschlossenen Zustand des Ventils 26 gegen einen in der Wasserablassöffnung 25 innenseitig angeordneten Ventilsitz 28 drückt. Der Ventilkegel 27 ist bei dem Ausführungsbeispiel gemäß Figur 3 über eine Schubstange 29 mit dem Schwimmer 22 gekoppelt, welcher über dem Ventilkegel 27 in dem in der Kammer 21 befindlichen Wasser W schwimmt. Sobald der Wasserspiegel unter ein bestimmtes Niveau absinkt, drückt der Schwimmer 22 den Ventilkegel 27 in den Ventilsitz 28 und das Ventil 26 ist geschlossen. Steigt der Wasserspiegel über eine bestimmte Höhe an, sorgt der Schwimmer 22 dafür, dass der Ventilkegel 27 vom Ventilsitz 28 abgehoben und das Wasserablassventil 26 geöffnet wird.

Die Kammer 21 ist so ausgebildet, dass der Dampfabscheider 8 einen ausreichenden Druck aufnehmen kann. Der Druck im Dampfabscheider 8 kann im Betrieb bis zu 2 bar und mehr betragen.

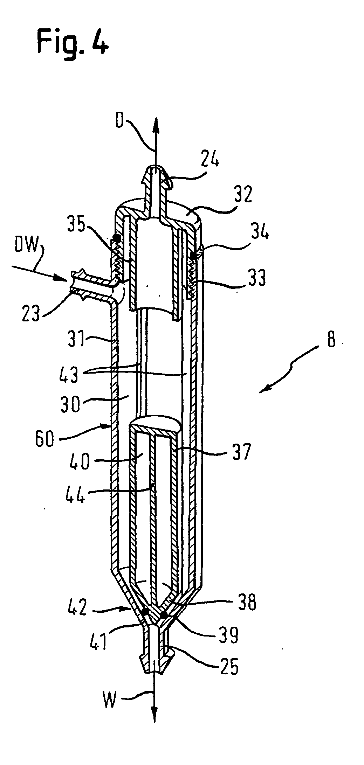

Figur 4 zeigt einen perspektivischen Längsschnitt durch einen besonders einfachen, effizient arbeitenden und raumsparend aufgebauten Dampfabscheider 8, welcher nach dem in Figur 3 dargestellten Prinzip arbeitet. Das Gehäuse 60 ist hier zweiteilig mit einem Gehäuseunterteil 31 und einer Kappe 32 aufgebaut. Die Kappe 32 ist mittels eines Gewindes 33 in das Gehäuseunterteil 31 eingeschraubt. Eine Dichtung 34, beispielsweise in Form eines O-Rings, sorgt dafür, dass auch bei einem höheren Druck kein Dampf unbeabsichtigt aus dem Dampfabscheider 8 entweicht.

Das Gehäuse 60 ist dabei insgesamt im Wesentlichen zylindrisch aufgebaut und weist an seinem unteren Ende einen kegelförmigen Abschnitt auf, welcher hier gleichzeitig als Ventilsitz 41 dient. Im Inneren des Dampfabscheiders 8 befindet sich ein Schwimmer 37, welcher ebenfalls im Wesentlichen zylindrisch aufgebaut ist, wobei die obere Stirnseite hier flach ausgestaltet ist und die untere Stirnseite wiederum kegelförmig ausgebildet ist. Dieses kegelförmige untere Ende des Schwimmers 37 bildet einen Ventilkegelabschnitt 38. In der Mantelfläche dieses Ventilkegelabschnitts 38 befindet sich eine Dichtung 39, welche gegen den durch die Innenseite der Gehäusewand des kegelförmigen Abschnitts des Gehäuses 60 gebildeten Ventilsitz 41 drückt und so gemeinsam mit diesem das Ventil 42 bildet. Dieser Mechanismus entspricht im Wesentlichen dem in Figur 3 dargestellten Prinzip, wobei jedoch anstelle einer Kopplung über eine Schubstange der Ventilkegel unmittelbar in den Schwimmer 37 integriert ist und somit bei kostengünstigerem Aufbau eine geringere Bauhöhe erreicht werden kann.

Der Schwimmer 37 weist im Inneren einen oder mehrere Hohlräume 40 auf und ist durch Stabilisierungsstege 44 (von denen hier einer dargestellt ist) stabilisiert. Um dafür zu sorgen, dass der Schwimmer 37 mit seinem Ventilkegelabschnitt 38 in den kegelförmigen Abschnitt des Gehäuseunterteils 31 drückt, wird der Schwimmer 37 durch Führungsstege 43 seitlich geführt, welche sich vertikal an der Innenseite der Zylinderwandung des Gehäuses 30 entlang erstrecken.

Der Schwimmer 37 kann von oben bei abgeschraubter Kappe 32 eingesetzt werden und auch durch Abschrauben dieser Kappe 32 wieder entnommen bzw. im Bedarfsfall ausgetauscht werden.

Im Inneren der Kappe 32 erstreckt sich koaxial zur Wand der Kappe 32 mit einem kurzen Abstand zu dieser ein Rohrabschnitt 35. Der Rohrabschnitt 35 ist so lang, dass er über das untere, im Gehäuseunterteil 31 angeordnete Ende der Kappe 32 hinaus und bis über den Einlass 23 hinweg in das Gehäuseunterteil 31 hineinragt. Dieser Rohrabschnitt 35 dient zum einen als Schwimmerbegrenzung nach oben und sorgt dafür, dass der Schwimmer 37 in einem Abstand zum Dampfauslass 24 gehalten wird. Eine weitere Funktion dieses Rohrabschnitts 35 besteht darin, dass er wie eine Prallplatte wirkt, an der das durch den Einlass 23 kommende Dampf/Wasser-Gemisch DW auftrifft, so dass sich die im Dampf befindlichen Wassertropfen dort niederschlagen und dann nach unten in die Kammer 30 abtropfen. Wenn sich genügend Wasser in der Kammer angesammelt hat, wird der Schwimmer 37 angehoben und dann durch das Ventil 42 geöffnet, so dass das Wasser den Dampfabscheider 8 durch den Wasserablass 25 wieder verlässt.

Eine andere Variante eines Dampfabscheiders ist in Figur 5 dargestellt. Auch dieser Dampfabscheider 8' weist eine entsprechend druckfeste Kammer 45 mit einer obenseitigen Dampfablassöffnung 24, einer untenseitigen Wasserablassöffnung 25 sowie einer seitlichen Einlassöffnung 23 für das Dampf/Wasser-Gemisch DW auf. Die Kammer 45 des Dampfabscheiders 8' kann auch hier zylindrisch aufgebaut sein, kann aber beispielsweise auch quaderförmig oder in einer anderen Form aufgebaut sein. Ebenso befindet sich hier an der Wasserablassöffnung 25 ein Wasserablassventil 46 mit einem Ventilkegel 47 und einem Ventilsitz 48 an oder in der Wasserablassöffnung 25. Über eine Schubstange 49 ist der Ventilkegel 47 wiederum mit einem Schwimmer 50 im Inneren der Kammer 45 so gekoppelt, dass das Ventil 46 geöffnet wird, wenn der Schwimmer 50 durch ein Ansteigen des Wasserspiegels im Inneren der Kammer 45 nach oben gehoben wird, und der Ventilkegel 47 wieder in den Ventilsitz 48 gedrückt und das Wasserablassventil 46 geschlossen wird, wenn der Schwimmer 50 absinkt. Jedoch ist die Schubstange 49 hier nicht direkt mit dem Schwimmer 50 verbunden, sondern der Schwimmer 50 ist an einem Hebelarm 52 befestigt, der um eine horizontale Achse drehbar an einer in der Kammer 45 befestigten Halterung 51 gelagert ist, und die Schubstange 49 ist schwenkbar mit dem Hebelarm 52 gekoppelt. Sofern der Verbindungspunkt 53, an dem die Schubstange 49 am Hebelarm 52 angelenkt ist, an der richtigen Position zwischen dem Schwimmer 50 und der Halterung 51 in der Kammer 45 liegt, kann der Schwimmer 50 eine größere Kraft auf den Ventilkegel 47 ausüben, so dass für einen dichteren Abschluss des Wasserablassventils 46 gesorgt werden kann als bei dem Ausführungsbeispiel gemäß Figur 3. Eine Einstellung der Schließkraft ist möglich, indem z. B. die Lage des Schwimmers 50 entlang des Hebelarms 52 verändert wird. Der Nachteil dieser Konstruktion besteht jedoch in dem größeren Raumbedarf.

Daher wird für ein bevorzugtes Ausführungsbeispiel mit einem geringen Platzbedarf der in Figur 4 dargestellte Dampfabscheider 8 genutzt.

Das durch die Wasserablassöffnung 25 abgelassene Wasser W wird, wie in Figur 1 dargestellt, über eine Leitung 19 an einem Verbindungsstück 20 wieder in die Leitung zwischen Wassertank 2 und Pumpe 3 geführt. Alternativ könnte das Wasser W von der Wasserablassöffnung 25 auch über eine Leitung 19' wieder in den Wassertank 2 zurückgeleitet werden. Dies ist durch die gestrichelte Leitung 19' in Figur 1 dargestellt. Auf das Anschlussstück 20 kann in diesem Fall verzichtet werden.

Die Steuerungseinrichtung 13, mit der zwischen dem Kaffeezubereitungsmodus und dem Dampferzeugungsmodus umgestellt werden kann, besteht aus mehreren Komponenten 14, 15, 16, welche hier ebenfalls durch einen strichlinierten Block zusammengefasst sind. Kern dieser Steuerungseinrichtung 13 ist bei dem Ausführungsbeispiel gemäß Figur 1 ein 3/2-Wege-Ventil 14, welches von einem Benutzer mechanisch über einen Ventildrehschalter 15 verstellt werden kann. Dieses Ventil 14 hat drei Schaltstellungen. In einer ersten Schaltstellung ist der am Ausgang der Heizeinrichtung 4 angeschlossene Ventileingang mit einem ersten Ventilausgang verbunden, an welchen die Brühkammer 5 angeschlossen ist. In einer weiteren Schaltstellung ist der Ventileingang mit einem zweiten Ventilausgang verbunden, welcher mit der Einlassöffnung 23 des Dampfabscheiders 8 verbunden ist. In der mittleren Schaltstellung ist das Ventil 14 geschlossen.

Weiterhin weist die Steuerungseinrichtung 13 eine elektronische Steuerungseinheit 16 auf, die als Komponenten eine Pumpensteuerung 17 und eine Temperatursteuerung 18 umfasst. Bei dieser Steuerungseinheit 16 kann es sich beispielsweise um einen Mikroprozessor, ASIC oder dergleichen handeln, wobei die Pumpensteuerung 17 und die Temperatursteuerung 18 in Form von Software realisiert sein können.

Es ist klar, dass die Kaffeemaschine einen Ein/Aus-Schalter sowie alle notwendigen Komponenten aufweist, um eine - über einen üblichen Stecker mittels eines Kabels zugeführte - Versorgungsspannung so umzuwandeln, dass hiermit die elektrischen Komponenten innerhalb der Kaffeemaschine versorgt werden können. Darüber hinaus kann die Maschine auch noch weitere bekannte Funktionseinheiten wie z. B. eine Betriebszustandsanzeige, eine Füllstandsanzeige, eine Verkalkungswarnleuchte, eine Warmhalteplatte, eine Druckanzeige etc. aufweisen. Solche üblichen Komponenten sind aber der Übersichtlichkeit wegen in Figur 1 nicht dargestellt.

Im Ventil 14 befindet sich ein geeignetes Messelement (nicht dargestellt), über welches die Schaltstellung des Ventils14 detektiert und ein geeignetes, die Ventilstellung repräsentierendes Ventilstellungssignal V an die elektronische Steuereinheit 16 übergeben bzw. von der elektronische Steuereinheit 16 abgegriffen werden kann.

Die Funktionsweise der Kaffeemaschine gemäß Figur 1 ist wie folgt:

In einer ersten Schaltstellung, im Kaffeezubereitungsmodus, wird Wasser W aus dem Wassertank 2 über die Pumpe 3 zum Durchlauferhitzer 4 gepumpt. Dabei steuert die Pumpensteuerung 17 der elektronischen Steuereinheit 16 die Pumpe 3 so an, dass die Pumpe 3 kontinuierlich Wasser in die Heizeinrichtung 4 drückt. Der Durchlauferhitzer 4 wird in diesem Kaffeezubereitungsmodus mittels eines von dem Heizungssteuerungsmodul 18 der elektronischen Steuereinheit 16 kommenden Temperatursignals T auf ca. 100° C eingestellt. Im Ventil 14 wird dann das heiße Wasser HW zur Kaffeezubereitung in die Brühkammer 5 geleitet.

Nachdem der Benutzer den fertigen Kaffee über den Auslauf 6 entnommen hat, kann er das Ventil 14 mit Hilfe des Ventildrehschalters 15 in die zweite Schaltstellung umschalten, so dass der Ausgang der Heizeinrichtung 4 mit der Einlassöffnung 23 des Dampfabscheiders 8 verbunden ist. Die Änderung der Ventilstellung wird von der elektronischen Steuereinheit 16 registriert, welche daraufhin dafür sorgt, dass die Pumpensteuerung 17 mittels eines Zeitsteuersignals Z die Pumpe 3 in einem bestimmten Zeittakt schaltet, wobei ca. alle 5 s die Pumpe 3 für 0,6 s eingeschaltet wird. Gleichzeitig wird über die Temperatursteuerung 18 dafür gesorgt, dass der Durchlauferhitzer 4 auf ca. 130°C eingestellt wird. Das taktweise in den Durchlauferhitzer 4 einströmende Wasser W wird bei der Temperatur von 130 ° C verdampft und der Dampf gelangt dann über das Ventil 14 mit einem Restwasseranteil als Dampf/Wasser-Gemisch DW bzw. Nassdampf in den Dampfabscheider 8.

Im Dampfabscheider 8 wird der Nassdampf so weit wie möglich vom Wasseranteil W getrennt und der Dampf D kann dann aus der Dampfdüse 12 des Dampfauslasses 10 entnommen werden, um beispielsweise Milch aufzuschäumen.

Anschließend kann der Nutzer das Ventil 14 mittels des Ventildrehschalters 15 in die dritte Schaltstellung umschalten. In dieser Schaltstellung ist das Ventil 14 geschlossen. Diese Ventilstellung wird ebenfalls von der elektrischen Steuereinheit 16 ermittelt und dementsprechend wird von der Steuereinheit 16 dafür gesorgt, dass über die Pumpensteuerung 17 die Pumpe 3 abgeschaltet wird und über die Temperatursteuerung 18 der Durchlauferhitzer 4 ausgeschaltet wird. Es entweicht dann lediglich noch der im Dampfabscheider 8 befindliche Restdampf.

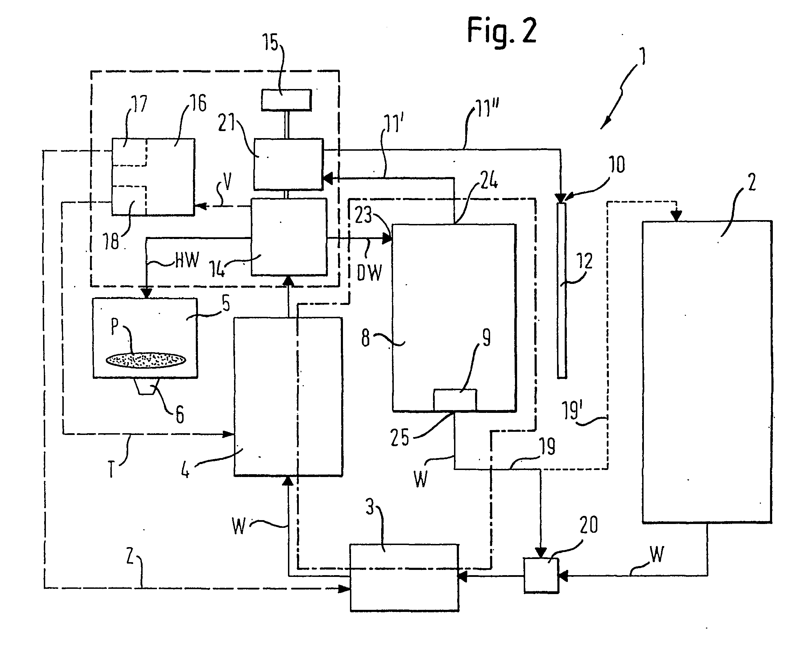

Um dies zu vermeiden, kann - wie in Figur 2 dargestellt - ein weiteres Ventil 21 genutzt werden. Die Kaffeemaschine 1 gemäß Figur 2 ist im Wesentlichen genauso aufgebaut wie die Kaffeemaschine nach Figur 1. Im Unterschied zur Kaffeemaschine gemäß Figur 1 weist diese Kaffeemaschine jedoch ein zur Steuerungseinrichtung 13 gehöriges zweites Ventil 21 auf, so dass durch die Steuerungseinrichtung 13 auch eingestellt werden kann, ob bereits im Dampfabscheider 8 bereitgestellter Dampf D durch den Dampfauslass 10 abgegeben wird. Dieses zweite Ventil 21 befindet sich zwischen der Dampfauslassöffnung 24 des Dampfabscheiders 8 und der Dampfdüse 12 der Dampfauslasseinrichtung 10. Anstelle eines einfachen Dampfrohrs 11 zur Düse 12 ist hierzu zunächst ein erstes Dampfableitungsstück 11' an der Dampfauslassöffnung 24 des Dampfabscheiders 8 angeordnet, welches zum Ventil 21 führt, und vom Ausgang des Ventils 21 führt dann schließlich ein Dampfrohr 11' zur Düse 12. Das zweite Ventil 21 ist hier so mit dem ersten Ventil 14 gekoppelt, dass das zweite Ventil 21 geschlossen ist, wenn sich das erste Ventil 14 in der dritten Schaltstellung befindet. Alternativ könnte das zweite Ventil 21 auch so aufgebaut und z. B. mit einem eigenen Schalter versehen sein, dass es unabhängig vom ersten Ventil 14 schaltbar ist.

Bei einer besonders raumsparenden Anordnung sind ein Durchlauferhitzer 4 und ein gemäß Figur 4 konstruierter Dampfabscheider 8 parallel nebeneinander angeordnet, wobei dem Durchlauferhitzer 4 das Wasser W von unten zugeführt wird, durch das Durchlauferhitzerrohr geleitet wird und obenseitig wieder aus dem Durchlauferhitzer 4 durch das Ventil 14 entweder zur Brühkammer 5 oder in den Dampf-/Wassereinlass 23 des Dampfabscheiders 8 geführt wird. Die Pumpe 3 sitzt dabei bevorzugt unterhalb des Durchlauferhitzers 4 und des Dampfabscheiders 8, so dass das aus dem Wasserablass 25 des Dampfabscheiders 8 zurückgeführte Wasser direkt wieder der Pumpe 3 zugeführt werden kann und erneut durch den Durchlauferhitzer 4 hochgepumpt wird. Der Dampfauslass 24 kann dann unmittelbar an das Dampfablassrohr 11 bzw. das Dampfableitungsstück 11' angeschlossen sein. Bei dieser Konstruktion sind die Wege relativ kurz, da das Dampfrohr üblicherweise ohnehin obenseitig am Gehäuse der Kaffeemaschine angeschlossen ist und von dort meist schräg nach unten bzw. zunächst gerade nach unten und dann weiter von der Maschine weg schräg abgewinkelt nach unten geführt wird, so dass die am Ende des Dampfrohrs 11 befindliche Düse leicht in ein mit Milch gefülltes Kännchen eingetaucht werden kann.

Es wird abschließend noch einmal darauf hingewiesen, dass es sich bei den vorhergehend beschriebenen Kaffeemaschinen um Ausführungsbeispiele handelt, welche vom Fachmann in verschiedenster Weise modifiziert werden können, ohne den Bereich der Erfindung zu verlassen. Insbesondere kann die Erfindung an beliebigen Brühgetränkemaschinen eingesetzt werden.

## Patentansprüche

1. Brühgetränkemaschine (1) mit einer Dampferzeugungseinrichtung (7) mit einer Heizeinrichtung zur Bereitstellung von Dampf (D), wobei die Dampferzeugungseinrichtung (7) einen der Heizeinrichtung nachgeschalteten Dampfabscheider (8, 8') umfasst, der eine Kammer (21, 30, 45) mit einer Einlassöffnung (23) für ein Dampf-Wasser-/Gemisch (DW) mit einer in einem oberen Bereich der Kammer (21, 30, 45) angeordneten Dampfablassöffnung (24) und mit einer in einem unteren Bereich der Kammer (21, 30, 45) angeordneten Wasserablassöffnung (25) sowie ein Wasserablassventil (26, 42, 46) für die Wasserablassöffnung (25) umfasst,
**dadurch gekennzeichnet, dass**
der Dampfabscheider (8, 8') eine Ventilsteuereinrichtung aufweist, um das Wasserablassventil (26, 42, 46) in Abhängigkeit von einem Wasserstand in der Kammer (21, 30, 45) anzusteuern.

2. Brühgetränkemaschine nach Anspruch 1, **dadurch gekennzeichnet, dass** die Ventilsteuereinrichtung einen in der Kammer (21, 30, 45) angeordneten Schwimmer (22, 37, 50) aufweist, welcher mit dem Wasserablassventil (26, 42, 46) gekoppelt ist.

3. Brühgetränkemaschine nach Anspruch 2, **dadurch gekennzeichnet, dass** der Schwimmer (37) einen integrierten Ventilkegel-Abschnitt (38) aufweist, welcher mit einem an der Wasserablassöffnung (25) angeordneten Ventilsitz (41) zusammenwirkt.

4. Brühgetränkemaschine nach einem der Ansprüche 1 bis 3, **gekennzeichnet durch** eine erste Heizeinrichtung zur Erhitzung von Wasser zur Zubereitung des Brühgetränks und eine zweite Heizeinrichtung für die Dampferzeugungseinrichtung.

5. Brühgetränkemaschine nach einem der Ansprüche 1 bis 3, **dadurch gekennzeichnet, dass** die Heizeinrichtung (4) zumindest zwischen zwei Betriebszuständen umschaltbar ist, wobei die Heizeinrichtung (4) in einem ersten Betriebszustand Wasser (W) auf einen ersten Temperaturwert zur Erzeugung des Brühgetränks erhitzt und in einem zweiten Betriebszustand Wasser (W) auf einen zweiten Temperaturwert zur Erzeugung von Dampf (D) erhitzt.

6. Brühgetränkemaschine nach einem der Ansprüche 1 bis 5, **dadurch gekennzeichnet, dass** zumindest die für die Dampferzeugung genutzte Heizeinrichtung (4) einen Durchlauferhitzer (4) umfasst.

7. Brühgetränkemaschine nach einem der Ansprüche 1 bis 6, **gekennzeichnet durch** eine Pumpe (3) mit einer Pumpenansteuerung (17), welche derart ausgebildet ist, dass die Pumpe (3) in einem Dampferzeugungs-Betriebszustand der Heizeinrichtung (4) Wasser (W) in einem vorgegebenen Takt zuführt.

8. Brühgetränkemaschine nach einem der Ansprüche 1 bis 7, **dadurch gekennzeichnet, dass** eine Wasserablassöffnung (25) des Dampfabscheiders (8, 8') mit einem Eingang der Heizeinrichtung (4) verbunden ist, so dass das aus dem Dampfabscheider (8, 8') abgelassene Wasser (W) der Heizeinrichtung (4) zugeführt wird.

9. Brühgetränkemaschine nach einem der Ansprüche 1 bis 8, **gekennzeichnet durch** ein der Heizeinrichtung (4) nachgeschaltetes erstes Ventil (14), welches in einem ersten Schaltzustand die Verbindung von einem Ausgang der Heizeinrichtung zu einer Brühkammer (5) blockiert, und welcher in einem zweiten Schaltzustand die Verbindung von einem Ausgang zu dem Dampfabscheider (7) und/oder dem Dampfauslass (10) blockiert.

10. Brühgetränkemaschine nach einem der Ansprüche 1 bis 9, **gekennzeichnet durch** ein zwischen dem Dampfabscheider (8) und einem Dampfauslass (10) angeordnetes zweites Ventil (21).

11. Brühgetränkemaschine nach einem der Ansprüche 1 bis 10, **dadurch gekennzeichnet, dass** die Brühgetränkemaschine (1) eine Espressomaschine oder Kaffeemaschine, insbesondere eine Pad-Kaffemaschine (1), ist.

## Claims

1. Hot drink machine (1) with a steam generating device (7) with a heating device for providing steam (D), wherein the steam generating device (7) comprises a steam separator (8, 8'), which is connected downstream of the heating device and which comprises a chamber (21, 30, 45) with an inlet opening (23) for a steam/water mixture (DW), with a steam discharge opening (24) arranged in an upper region of the chamber (21, 30, 45) and with a water discharge opening (25) arranged in a lower region of the chamber (21, 30, 45) as well as a water discharge valve (26, 42, 46) for the water discharge opening (25), **characterised in that** the steam separator (8, 8') comprises a valve control device so as to control the water discharge valve (26, 42, 46) in dependence on a water state in the chamber (21, 30, 45).

2. Hot drink machine according to claim 1, **characterised in that** the valve control device comprises a float (22, 37, 50), which is arranged in the chamber (21, 30, 45) and which is coupled with the water discharge valve (26, 42, 46).

3. Hot drink machine according to claim 2, **characterised in that** the float (37) has an integrated valve cone section (38) which co-operates with a valve seat (41) arranged at the water discharge opening (25).

4. Hot drink machine according to any one of claims 1 to 3, **characterised by** a first heating device for heating water for preparation of the hot drink and a second heating device for the steam generating device.

5. Hot drink machine according to any one of claims 1 to 3, **characterised in that** the heating device (4) is switchable over between at least two operating states, wherein the heating device (4) in a first operating state heats water (W) to a first temperature value for producing the hot drink and in a second operating state heats water (W) to a second temperature value for generating steam (D).

6. Hot drink machine according to any one of claims 1 to 5, **characterised in that** at least the heating device (4) used for the steam generation comprises a throughflow heater (4).

7. Hot drink machine according to any one of claims 1 to 6, **characterised by** a pump (3) with a pump drive control (17), which is constructed in such a manner that the pump (3) in a steam generating operational state feeds water (W) to the heating device (4) in a predetermined rhythm.

8. Hot drink machine according to any one of claims 1 to 7, **characterised in that** a water discharge opening (25) of the steam separator (8, 8') is connected with an inlet of the heating device (4) so that the water (W) discharged from the steam separator (8, 8') is fed to the heating device (4).

9. Hot drink machine according to any one of claims 1 to 8, **characterised by** a first valve (14) which is connected downstream of the heating device (4) and which in a first switching state blocks the connection from an outlet of the heating device to a brewing chamber (5) and in a second switching state blocks the connection from an outlet to the steam separator (7) and/or the steam outlet (10).

10. Hot drink machine according to any one of claims 1 to 9, **characterised by** a second valve (21) arranged between the steam separator (8) and a steam outlet (10).

11. Hot drink machine according to any one of claims 1 to 10, **characterised in that** the hot drink machine (1) is an expresso machine or coffee machine, particularly a pad coffee machine (1).

## Revendications

1. Machine de préparation de boissons chaudes (1) comportant un dispositif de production de vapeur (7) avec un dispositif de chauffage pour fournir de la vapeur (D), le dispositif de production de vapeur (7) comportant un séparateur de vapeur (8, 8') qui est situé en aval du dispositif de chauffage et comporte une chambre (21, 30, 45) avec un orifice d'admission (23) pour un mélange de vapeur et d'eau (DW), avec un orifice de sortie de vapeur (24) situé dans une zone supérieure de la chambre (21, 30, 45) et avec un orifice de sortie d'eau (25) situé dans une zone inférieure de la chambre (21, 30, 45) ainsi qu'une vanne de sortie d'eau (26, 42, 46) pour l'orifice de sortie d'eau (25),
**caractérisée en ce que**
le séparateur de vapeur (8, 8') comporte un dispositif de commande de vanne pour piloter la vanne de sortie d'eau (26, 42, 46) en fonction d'un niveau d'eau dans la chambre (21, 30, 45).

2. Machine de préparation de boissons chaudes selon la revendication 1, **caractérisée en ce que** le dispositif de commande de vanne comporte un flotteur (22, 37, 50) situé dans la chambre (21, 30, 45) et couplé à la vanne de sortie d'eau (26, 42, 46).

3. Machine de préparation de boissons chaudes selon la revendication 2, **caractérisée en ce que** le flotteur (37) présente une partie de cône de vanne (38) intégrée qui coopère avec un siège de vanne (41) situé au niveau de l'orifice de sortie d'eau (25).

4. Machine de préparation de boissons chaudes selon l'une des revendications 1 à 3, **caractérisée par** un premier dispositif de chauffage pour chauffer de l'eau pour préparer la boisson chaude et un deuxième dispositif de chauffage pour le dispositif de production de vapeur.

5. Machine de préparation de boissons chaudes selon l'une des revendications 1 à 3, **caractérisée en ce que** le dispositif de chauffage (4) est commutable au moins entre deux modes de fonctionnement, le dispositif de chauffage (4), dans un premier mode de fonctionnement, portant de l'eau (W) à une première valeur de température pour produire la boisson chaude et, dans un deuxième mode de fonctionnement (W), portant de l'eau (W) à une deuxième valeur de température pour produire de la vapeur (D).

6. Machine de préparation de boissons chaudes selon l'une des revendications 1 à 5, **caractérisée en ce qu'**au moins le dispositif de chauffage (4) utilisé pour la production de vapeur comprend un chauffe-eau instantané (4).

7. Machine de préparation de boissons chaudes selon l'une des revendications 1 à 6, **caractérisée par** une pompe (3) avec une commande de pompe (17) qui est réalisée de manière telle que la pompe (3), dans un mode de fonctionnement de production de vapeur, amène de l'eau (W) au dispositif de chauffage (4) à une cadence prédéterminée.

8. Machine de préparation de boissons chaudes selon l'une des revendications 1 à 7, **caractérisée en ce qu'**un orifice de sortie d'eau (25) du séparateur de vapeur (8, 8') est relié à une entrée du dispositif de chauffage (4) de sorte que l'eau (W) qui sort du séparateur de vapeur (8, 8') est amenée au dispositif de chauffage (4).

9. Machine de préparation de boissons chaudes selon l'une des revendications 1 à 8, **caractérisée par** une première vanne (14) montée en aval du dispositif de chauffage (4), laquelle, dans un premier état de commutation, bloque la liaison entre une sortie du dispositif de chauffage et une chambre d'infusion (5) et laquelle, dans un deuxième état de commutation, bloque la liaison entre une sortie et le séparateur de vapeur (7) et/ou la sortie de vapeur (10).

10. Machine de préparation de boissons chaudes selon l'une des revendications 1 à 9, **caractérisée par** une deuxième vanne (21) située entre le séparateur de vapeur (8) et une sortie de vapeur (10).

11. Machine de préparation de boissons chaudes selon l'une des revendications 1 à 10, **caractérisée en ce que** la machine de préparation de boissons chaudes (1) est une machine à espresso ou une machine à café, en particulier une machine à café à dosettes (1).
